Europäisches Patentamt

European Patent Office

Office européen des brevets

(11) Numéro de publication: **0 027 747**

**A2**

# (12) DEMANDE DE BREVET EUROPEEN

(21) Numéro de dépôt: 80401290.4

(22) Date de dépôt: 10.09.80

(51) Int. Cl.³: **B 60 R 21/10**
B 60 R 21/08, E 05 B 65/20
B 60 K 28/00, B 60 Q 9/00

(30) Priorité: 23.10.79 FR 7926208

(43) Date de publication de la demande:
29.04.81 Bulletin 81/17

(84) Etats Contractants Désignés:
DE GB IT SE

(71) Demandeur: REGIE NATIONALE DES USINES
RENAULT
Boite postale 103 8-10 avenue Emile Zola
F-92109 Boulogne-Billancourt(FR)

(72) Inventeur: Montaron, Bernard
76, allées Jean-Jaurés
F-31000 Toulouse(FR)

(74) Mandataire: Jacques, Max et al,
RNUR - S. 0804 BP 103
F-92109 Boulogne Billancourt(FR)

(54) Système de détection de collisions et de commande de dispositif de sécurité.

(57) Système embarqué sur véhicule constitué par un ensemble de capteurs accélérométriques (20), un microcalculateur (4), un ensemble de moyens (13 à 19) relatifs à la sécurité des passagers. Les capteurs (20) renseignent le calculateur (4) sur les niveaux accélérométriques en différents points de la structure du véhicule. Le calculateur traite ces informations, contrôle l'état de marche des capteurs (20), de l'alimentation (1) électrique, des dispositifs de sécurité. En cas de choc grave, le calculateur commande le déclenchement des dispositifs de sécurité adaptés à la situation : décondamnation électromagnétique des portes, ceintures à rétraction pyrotechnique, sacs gonflables, larguage des ceintures.

./...

Croydon Printing Company Ltd.

FIG_1

- 1 -

SYSTEME DE DETECTION DE COLLISIONS ET DE COMMANDE DE DISPOSITIF DE
SECURITE.

La présente invention se rapporte à un système automatique de détection de collisions et de commande des dispositifs assurant la sécurité des passagers à bord d'un véhicule.

Un capteur de chocs, répondant en tout ou rien, est généralement constitué d'une masselotte couplée au véhicule par l'action d'une force de rappel comme, par exemple, une force magnétique (aimant) ou une force mécanique (ressort). La messelotte se déplace dans le sens des accélérations qu'elle subit et, dans certaines conditions de choc, vient buter sur un dispositif qui délivre un signal électrique, par exemple en établissant un contact entre deux fils. Les inconvénients d'un tel type de capteur sont notamment la difficulté du contrôle de l'état de fonctionnement du capteur pendant la marche du véhicule en l'absence de chocs et l'impossibilité d'utiliser un même capteur pour commander plusieurs dispositifs dont certains doivent être déclenchés pour des chocs ne présentant pas les mêmes caractéristiques.

Le système, objet de la présente invention, qui élimine ces problèmes, utilise des capteurs délivrant un signal électrique variant continuellement avec l'accélération. Le contrôle de l'Etat de marche des capteurs est rendu possible par l'existence d'un signal provoqué par les freinages, accélérations et vibrations du véhicule.

Dans certains dispositifs de l'art antérieur, le contrôle de la bonne marche d'un capteur est effectué en mesurant un paramètre qui n'est pas directement le signal délivré par le capteur. Cette démarche ne présente pas une fiabilité suffisante. En effet, un capteur accélérométrique comportant par exemple une jauge de contrainte collée sur une lame vibrante peut présenter une résistance normale (paramètre contrôlé) et, pourtant, ne pas donner de signal, il suffit pour cela que la jauge se soit décollée sous l'effet des vibrations, de même pour un capteur piézo-électrique si l'on mesure sa capacité.

Le système, objet de la présente invention, utilise une procédure de contrôle des capteurs d'une fiabilité supérieure. Plusieurs capteurs sont utilisés à bord du véhicule, de manière à assurer une bonne détection dans des conditions variées de collisions. Il est donc possible d'établir des corrélations entre capteurs pour détecter le fonctionnement anormal de l'un ou plusieurs d'entre eux lorsque moins de la moitié d'entre eux sont défaillants. Ce contrôle est l'une des fonctions du microprocesseur qui constitue l'organe central du système, objet de la présente invention.

Une autre fonction remplie par le microprocesseur est le calcul, à partir des données accélérométriques fournies par les capteurs, de certains paramètres dont les valeurs déterminent le déclenchement du ou des dispositifs de sécurité appropriés. Ce système autorise, par simple programmation, le choix d'un ou plusieurs critères de déclenchement parmi toute une famille de critères d'une très grande variété. La grande souplesse d'un tel dispositif facilite notablement sa mise au point sur véhicule et permet une adaptation du même système sur tous les types de véhicules.

Par ailleurs, il est souhaitable, dans tout système garantissant la sécurité des passagers, de veiller automatiquement à la bonne marche des dispositifs de sécurité. Ceci nécessite la présence d'une électronique généralement complexe.

Dans le système, objet de la présente invention, le microprocesseur réalise également la fonction de surveillance du bon fonctionnement de l'alimentation électrique, des dispositifs de sécurité et, d'une manière générale, de tous les systèmes périphériques qui lui sont connectés et qui doivent être surveillés.

Toute défaillance d'une partie du système est indiquée aux passagers par un signal permanent ou intermittent qui peut être lumineux et/ou sonore. De plus, un code numérique caractéristique de l'élément défaillant est mis en mémoire dans le microprocesseur. Ceci permet la localisation aisée d'un élément défaillant, même si cette défaillance est intermittente.

Lors d'une collision, le processeur enregistre en mémoire les paramètres du choc et les mises en action des différents dispositifs de sécurité. L'utilisation d'une alimentation électrique supplémentaire permet la sauvegarde de ces informations en cas de destruction de la batterie du véhicule.

Les informations contenues dans la mémoire du microprocesseur peuvent être lues au moyen d'un organe adapté que l'on branche au système. Cet organe peut éventuellement faire partie du système lui-même.

La partie de la mémoire du microprocesseur, réservée à l'enregistrement des informations pouvant être lues par cet organe, est séparée en deux zones :

- une zone "diagnostic" contenant les codes d'erreurs indiquant les parties défaillantes du système,

- et une zone "choc" contenant l'enregistrement des paramètres de la collision éventuelle et des phases de fonctionnement de l'ensemble des dispositifs de sécurité.

La zone "diagnostic" est accessible aux services assurant la maintenance du matériel. La zone "choc" est accessible par exemple aux constructeurs.

D'autres caractéristiques du système, objet de la présente invention, apparaîtront dans la description qui suit et qui n'est donnée qu'à titre d'exemple. A cet effet, on se reportera aux dessins joints dans lesquels :

- la figure 1 est un schéma synoptique illustrant la structure générale d'un mode de réalisation de l'invention,

- la figure 2 représente un mode de réalisation de l'élément 2 assurant principalement la fonction de filtrage et de régulation de l'alimentation électrique et contenant une alimentation électrique supplémentaire,

- la figure 3 illustre un mode de réalisation des commandes des dispositifs pyrotechniques 13, 14, 16, 17, 18,

- la figure 4 représente une réalisation possible des éléments 26 et,

- la figure 5 présente une organisation possible du calculateur 4 à partir d'un microprocesseur.

Les mêmes références numériques désignent les mêmes organes sur les différentes figures.

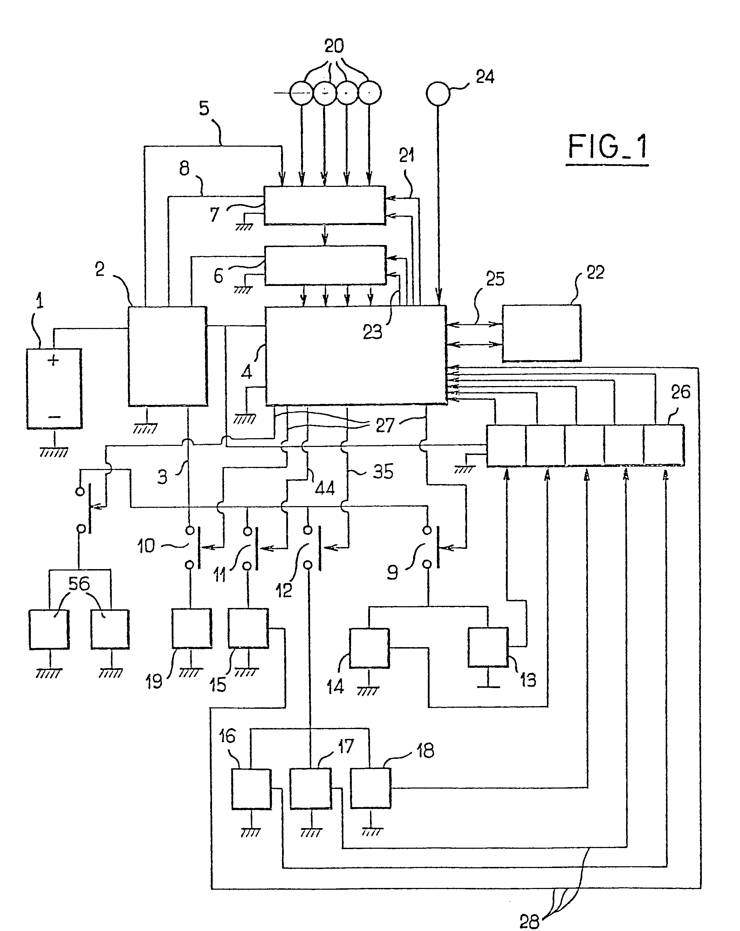

Dans la figure 1, l'élément 1 représente la batterie du véhicule dont le pôle négatif est connecté à la masse. Le pôle positif de l'élément 1 est connecté à un élément 2 détaillé dans la figure 2. L'élément 2, qui assure le filtrage et la régulation de l'alimentation électrique principale 1 et qui contient un dispositif assurant une alimentation électrique supplémentaire, est relié par le ou les fils 3 aux éléments 9, 10, 11, 12, en nombre donné à titre d'exemple, qui peuvent être des relais électromagnétiques et/ou des transistors par exemple.

L'élément 2, relié à la masse, assure l'alimentation électrique du microprocesseur 4, de l'élément 6, de l'élément 7, par l'intermédiaire du fil 8 et des éléments 26. L'élément 2 est également connecté à 7 par l'intermédiaire du fil 5. Cette connexion ne constitue pas une alimentation en énergie mais donne une information à 7 sur l'état de fonctionnement de l'alimentation.

L'élément 7 est un multiplexeur auquel est connecté un ensemble de capteurs 20, en nombre donné à titre d'exemple, notamment des capteurs accélérométriques. L'élément 2 est également connecté au multiplexeur 7 par un fil 5 véhiculant une tension proportionnelle à la tension d'alimentation du système.

La sélection d'une entrée du multiplexeur 7 est réalisée par le microprocesseur 4 par l'intermédiaire des liaisons 21, en nombre donné à titre d'exemple. La sortie du multiplexeur 7 est reliée à un convertisseur analogique numérique 6 délivrant un signal binaire au microprocesseur 4 par l'intermédiaire de liaisons, en nombre donné à titre d'exemple dans la figure 1.

Le microprocesseur 4 commande le fonctionnement du convertisseur 6 par l'intermédiaire des fils 23, en nombre donné à titre d'exemple.

Un ou plusieurs éléments 24, notamment des capteurs accélérométriques fonctionnant en tout ou rien et/ou par exemple un élément indiquant si le contact démarreur du véhicule est établi ou coupé, sont reliés directement au microprocesseur 4.

Les capteurs accélérométriques 20 sont répartis de façon appropriée à l'intérieur du véhicule pour rendre compte de la situation de ce dernier dans ses parties essentielles.

Un élément 22, qui est par exemple une valise diagnostic contenant un microcalculateur, peut être connecté au microprocesseur 4 pour lire le contenu de certaines zones de la mémoire du microprocesseur 4.

Une ou plusieurs sorties 27, 35, 44 du microprocesseur 4 commandent, par l'intermédiaire des éléments 9, 10, 11, 12, des dispositifs de sécurité 13, 14, 15, 16, 17, 18, 19, en nombre donné à titre d'exemple.

Ces dispositifs peuvent être, par exemple, un dispositif 19 de décondamnation électromagnétique des portes du véhicule, un dispositif 15 de signalisation des défaillances du système (par exemple un voyant lumineux et/ou un avertisseur sonore), un ou plusieurs dispositifs 16, 17, 18 de commande pyrotechnique de déclenchement

du g onfage de sacs de protection, un ou plusieurs dispositifs 13, 14 de commande de ceintures de sécurité à rétraction mécanique et/ou pyrotechnique, un ou plusieurs dispositifs 56 de larguage de ceintures de sécurité utilisant, par exemple, des boulons explosifs aux points d'ancrage des ceintures.

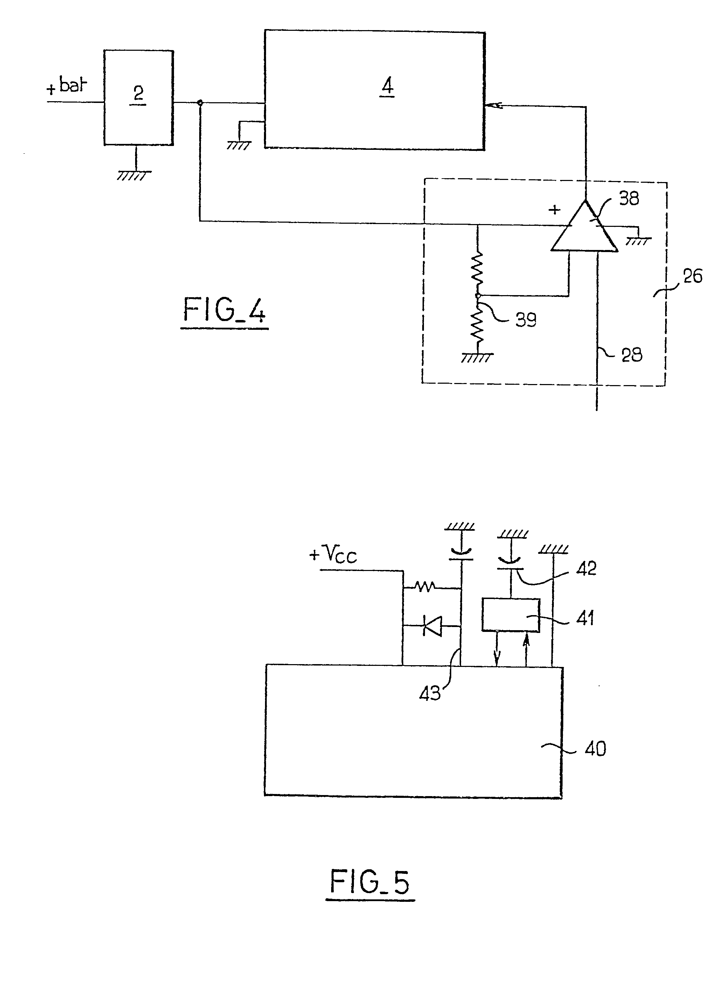

Le ou les dispositifs de sécurité 13 à 19 et 56, dont le bon fonctionnement doit être surveillé, sont reliés par des fils 28, en nombre donné à titre d'exemple, au microprocesseur 4. Certains d'entre eux peuvent être connectés à des éléments 26 intermédiaires, décrits en figure 4.

Dans la figure 2, la batterie du véhicule 1 est reliée à une inductance 29 en série avec une résistance 30. Ces deux éléments permettent d'atténuer les impulsions positives de tension en provenance de la batterie. Un diviseur de tension 31, constitué de deux résistances, est connecté à 30. La sortie 5 donne une information au processeur 4, par l'intermédiaire des éléments 6, 7, sur la tension d'alimentation du système.

Le fil 3 d'alimentation des dispositifs de sécurité décrits dans la figure 1 est connecté à la résistance 30. Une diode 32 assure la protection du système contre les impulsions négatives de tension en provenance de la batterie du véhicule. Une diode Zener 33 absorbe les impulsions positives de tension dépassant une certaine valeur.

Une batterie supplémentaire 34, comprenant éventuellement un dispositif de limitation du courant de charge, permet d'alimenter le processeur 4 lorsque la batterie 1 du véhicule est défaillante. L'alimentation des éléments 4, 6, 7 se fait à travers un régulateur de tension 55.

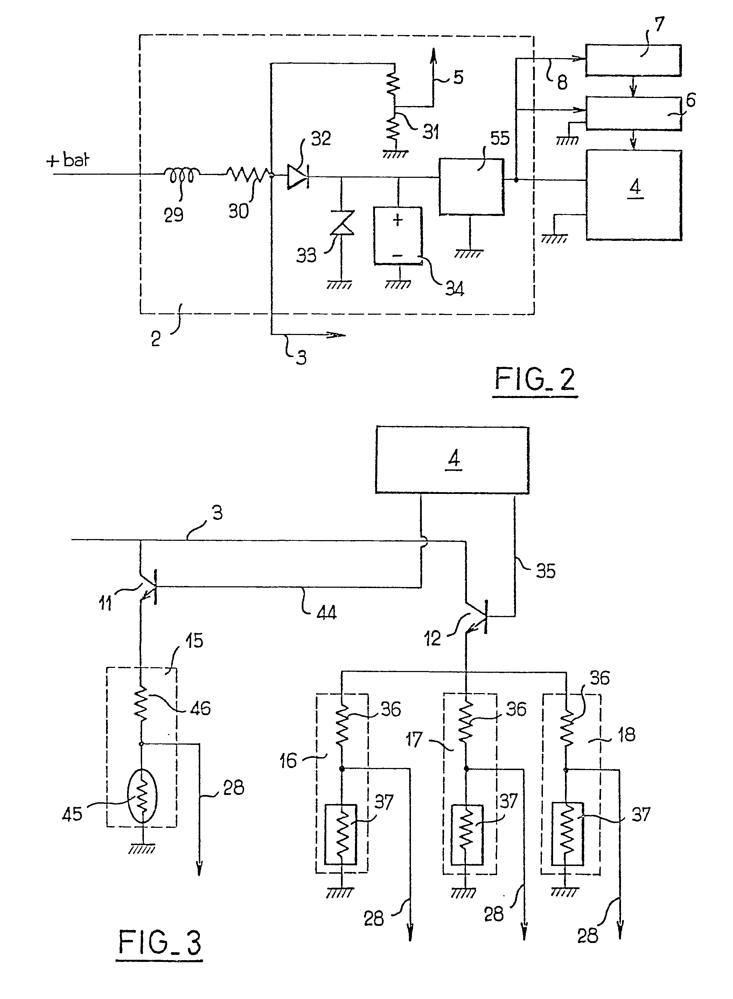

La figure 3 illustre un mode de réalisation de la commande des dispositifs pyrotechniques et d'un dispositif de signalisation des défaillances du système.

La mise sous tension (état haut) de la sortie 35 du microprocesseur 4 rend passant le transistor 12 et permet l'alimentation en tension des dispositifs 16, 17, 18 constitués chacun d'une résistance 36 en série avec une ou des résistances chauffantes 37 permettant l'allumage de l'amorce pyrotechnique.

Le contrôle du bon fonctionnement d'un ou de plusieurs dispositifs est effectué par le microprocesseur 4 en ne laissant la sortie 35 à l'état haut que pendant un temps très court, par exemple quelques dizaines de microsecondes. Ainsi, l'énergie dissipée dans la résistance 37 est trop faible pour provoquer l'échauffement nécessaire à un déclenchement du dispositif. La tension véhiculée par la sortie 28 est alors fonction du rapport des résistances 37 et 36, elle permet de tester le bon fonctionnement de l'ensemble du dispositif. Ce type de contrôle permet d'éliminer les problèmes causés par les mauvais contacts, notamment au niveau des contacts tournants du volant de direction du véhicule.

Remarquons que ce contrôle ne se limite pas au seul élément 37 mais à l'ensemble de la ligne de commande du dispositif. De la même façon, le microprocesseur 4 effectue le contrôle d'un voyant lumineux 45.

La figure 4 illustre un mode de réalisation des éléments 26. La tension véhiculée par un fil 28 est comparée au moyen d'un élément 38 à une tension fixe délivrée par un diviseur de tension 39 connecté à l'alimentation régulée 55 illustrée à la figure 2. L'élément 38 est par exemple un amplificateur opérationnel fonctionnant en comparateur.

La figure 5 présente certains éléments supplémentaires intervenant dans la réalisation du microprocesseur 4. Le microprocesseur 4 est constitué d'un ou plusieurs microprocesseurs 40. Un circuit oscillant 41, comme par exemple un quartz ou un circuit résistance - capacité, éventuellement protégé contre les parasites par une capacité 42, donne la base de temps nécessaire à l'horloge du microprocesseur. La sortie 43 est la mise à zéro du microprocesseur (reset).

Lorsque le système fonctionne, le microprocesseur exécute un programme en mémoire caractérisé en ce qu'il comporte un certain nombre de tâches qui peuvent être par exemple et dans un ordre éventuellement différent :

- Initialisation du microprocesseur à la suite de la mise en contact du démarreur

- Acquisition des données fournies par les capteurs accélérométriques (et autres) 20

- Acquisition d'une donnée fonction de la tension d'alimentation du système et des données fournies par les entrées 24

- Mesure de l'état de fonctionnement des dispositifs de sécurité et de moyens de signalisation

- Comparaison des données accélérométriques à certains seuils, fixés par le programme, et, en cas de dépassement des seuils, appel d'une procédure d'alarme

- Comparaison des données accélérométriques entre elles et recherche du ou des capteurs présentant des signaux anormalement bas. En cas de signal trop bas, appel d'une procédure "défaillance"

- Comparaison avec certaines valeurs fixées par le programme des données acquises concernant l'alimentation électrique du système, les dispositifs de sécurité et les moyens de signalisation et, en cas de test positif, appel d'une procédure "défaillance"

- En cas d'appel, exécution d'une procédure "défaillance", qui consiste en une mise en zone mémoire "diagnostic" de codes numériques caractéristiques du ou des organes défectueux et déclenchement d'un moyen de signalisation

- Lecture des entrées 25 et comparaison de leurs valeurs à des valeurs fixées par le programme. En cas de test positif, appel d'une procédure "dialogue"

- En cas d'appel, exécution d'une procédure "dialogue". En fonction de la valeur des entrées 25, le microprocesseur transmet à l'organe 22 le contenu de l'une des zones mémoires : zone "diagnostic" ou zone "choc"

- En cas d'appel, exécution d'une procédure d'alarme. Le microprocesseur lit les données accélérométriques et exécute un calcul à partir de ces données et des valeurs antérieures mises en mémoire. Le microprocesseur calcule également le temps écoulé depuis le déclenchement de la procédure d'alarme à partir du signal fourni par l'horloge. Le microprocesseur compare les paramètres calculés à certaines valeurs fixées par le programme. En fonction du résultat de la comparaison, le microprocesseur poursuit la procédure d'alarme ou bien déclenche le ou les dispositifs de sécurité prévus par ce programme ou bien stoppe la procédure d'alarme et reprend l'exécution normale du programme. A chaque déclenchement d'un dispositif de sécurité, le microprocesseur met en zone mémoire "choc" les paramètres calculés caractérisant le choc ainsi qu'un code caractéristique du ou des dispositifs déclenchés. Les informations provenant de certains fils 28 peuvent également être rangées en zone mémoire "choc" à des intervalles de temps prévus par le programme. Lorsque les paramètres calculés reprennent des valeurs correspondant à une situation normale ou lorsque le temps écoulé depuis le début de la collision dépasse un certain seuil fixé par le programme et si certains dispositifs ont été actionnés comme par exemple les sacs gonflables alors le microprocesseur commande les éléments 56 qui libèrent les passagers de leur ceinture.

Cette liste des tâches n'est pas limitative, elle peut être complétée et chaque tâche peut être détaillée.

Ainsi, dans le but de diminuer la consommation électrique du système, il est possible d'inclure une tâche "état de veille". Si l'entrée 24, correspondant au contact démarreur, signale la coupure du contact, le microprocesseur commence un comptage, inclus dans l'exécution du programme, sans que cette exécution soit interrompue. Le comptage dure tant que le contact démarreur est coupé, la mise en contact du démarreur annule le résultat du comptage. Dès que le résultat du comptage atteint une certaine valeur fixée par le programme (correspondant à un temps écoulé de, par exemple, quelques dizaines de secondes), le microprocesseur se met en état de veille. Dans cet état, il ne consomme pratiquement plus aucun courant, excepté celui nécessaire à la sauvegarde des informations en mémoire.

Le retard à la mise en état de veille permet d'éviter que le microprocesseur stoppe ses activités à cause d'une coupure de certains fils au cours d'un choc.

Le contrôle de l'état de fonctionnement des capteurs accélérométriques peut être réalisé en comparant chaque signal à la somme des autres divisée par un facteur fixé par le programme.

La procédure d'alarme se traduit par l'exécution d'une boucle dont le temps d'exécution est à peu près constant. Ainsi, le microprocesseur peut, par exemple, calculer la somme des accélérations lues à chaque boucle pour un capteur et ceci pour chaque capteur. Les quantités calculées sont alors proportionnelles à la variation de vitesse des capteurs. Ces variations peuvent être comparées à des valeurs fixées par le programme.

Dans la procédure d'alarme, lorsque les paramètres caractéristiques du choc reprennent des valeurs correspondant à des conditions normales, il est possible d'inclure une tâche supplémentaire qui vérifie l'état de l'alimentation électrique principale (batterie du véhicule) et, en fonction de cet état, reprend l'exécution normale du programme ou bien exécute la procédure "défaillance" et se met en état de veille.

De nombreuses variantes peuvent être imaginées pour ce programme qui n'est donné ici qu'à titre d'exemple.

REVENDICATIONS

1) Système de détection de collisions et de commande de dispositif de sécurité pour les passagers d'un véhicule, caractérisé en ce qu'il comprend : des capteurs assurant une mesure selon une fonction continue de l'accélération du véhicule, un calculateur numérique du type microprocesseur traitant les informations issues de ces capteurs et décidant, par comparaison avec les valeurs enregistrées dans sa mémoire interne, si le choc dépasse les limites au-delà desquelles la protection des passagers doit être déclenchée, des actionneurs de type électrique, pneumatique, hydraulique et/ou pyrotechnique, des moyens de liaison entre ces différents organes, des moyens d'autocontrôle permanent, le contrôle faisant partie du cycle de fonctionnement du calculateur numérique et des moyens de signalisation et d'enregistrement en mémoire des défaillances.

2) Système de détection et de contrôle suivant la revendication 1, caractérisé en ce que les dispositifs de sécurité comprennent :
- des ceintures à rétraction pyrotechnique,
- et/ou des sacs gonflables par des moyens pyrotechniques,
- et/ou des dispositifs de larguage des ceintures de sécurité comme, par exemple, des boulons explosifs ou des dispositifs électriques aux points d'ancrage.

3) Système de détection suivant la revendication 1 ou 2, caractérisé en ce qu'il est prévu des moyens de mise en mémoire des paramètres caractéristiques de la collision et des phases de fonctionnement des dispositifs de sécurité.

4) Système de détection suivant l'une quelconque des revendications 1 à 3, caractérisé en ce qu'il est prévu de pouvoir brancher sur le microprocesseur un dispositif annexe permettant la lecture de parties de la mémoire interne dudit microprocesseur.

5) Système de détection suivant l'une quelconque des revendications 1 à 4, caractérisé en ce que les capteurs sont de type piézo-électrique.

6) Système de détection suivant l'une quelconque des revendications 1 à 5, caractérisé en ce que l'alimentation électrique principale du véhicule est doublée d'une alimentation électrique secondaire utilisée pour maintenir le microprocesseur sous tension en cas de défaillance de la batterie principale.

- 11 -

7) Système de détection suivant la revendication 1, caractérisé en ce que le contrôle de l'état de fonctionnement des capteurs d'accélération se fait en comparant le signal délivré par chaque capteur à la moyenne des signaux délivrés par plusieurs capteurs.

8) Système de détection suivant les revendications 1 et 2, caractérisé en ce que le contrôle de l'état de fonctionnement des dispositifs de sécurité pyrotechniques (13, 14, 16, 17, 18) se fait en utilisant la ligne électrique de commande de ces dispositifs par la mise sous tension de cette ligne pendant un temps suffisamment court pour ne pas déclencher les dispositifs et par la mesure de tensions fonctions des résistances utilisées pour déclencher les charges explosives et en ce que le courant véhiculé par les fils au cours de ce contrôle est égal au courant de déclenchement.

9) Système de détection suivant la revendication 1, caractérisé en ce que les moyens de signalisation des défaillances des parties du système comportent au moins un voyant lumineux et/ou un moyen de signalisation sonore.

FIG_1

0027747

FIG_2

FIG_3

FIG_4

FIG_5